# EUROPEAN PATENT APPLICATION

(11) **EP 2 276 156 A1**
(43) Date of publication of application: **19.01.2011**
(21) Application number: 08736748.8
(22) Date of filing: 29.03.2008
(51) Int. Cl.: H02K 53/00

(54) **MAGNETIC MOTOR COMPRISING PERMANENT MAGNETS AND HAVING A MAIN ROTOR AND SECONDARY ROTORS**

(71) Applicant: Messina Lamas, Alfredo, 15220 Ames - La Coruña (ES)
(72) Inventor: Messina Lamas, Alfredo, 15220 Ames - La Coruña (ES)
(74) Representative: Isern-Jara, Nuria
(86) International application number: PCT/ES2008/070061
(87) International publication number: WO 2009/121981

(57) **Abstract**

The invention relates to a magnetic motor comprising permanent magnets and having a main rotor and secondary rotors. The motor is formed by a main rotor (1) provided with a series of magnets (2) on the outer part thereof, oriented such that one of the poles thereof faces outwards, and a series of secondary rotors (3) in the form of magnets having a north/south axis aligned with the shaft of the rotor and being distributed around the main rotor and forced to rotate about the shaft thereof with the passage of the magnets of the primary rotor. In addition, a magnetic barrier (4) is positioned between the secondary rotors, which prevents interaction between the magnets at the moments at which the force opposes the movement.

## Description

This invention relates to a motor which only functions with permanent magnets and which has a main rotor with a series of magnets on the exterior part and several secondary rotors which are magnets that rotate around the axis thereof in addition to having other devices to achieve the good operation thereof, such as, for example, an insulating or magnetic barrier which permits the action of the magnets only at times when the force favours movement. This invention is included in the sector of magnetic motors, more specifically in the sector of permanent magnet or renewable energy motors.

Magnetic motors are included amongst the different types of motors and, within this type, there are continuous current motors and alternate current motors. Motors which use permanent magnets are almost completely continuous current motors, but motors that operate exclusively with permanent magnets without the use of current do not currently exist.

In most cases, it would be desirable to substitute the motors which consume energy such as electric, gas and those derived from oil, with other energies that do not contaminate, that are renewable and more economical, and also can generate electric energy with the operation of motors which function with this energy to supply energy in homes and industries. When making a motor run which only functions with magnets, we find that the repulsion force from one point that we are trying to use is cancelled out by the repulsion force used to arrive at that point.

In order to resolve the drawback, we will use a main rotor with a series of magnets and a number of secondary rotors. Furthermore, we will use a magnetic barrier which prevents the interaction of the forces of the magnets of the primary rotor with the secondary rotors while this force opposes the movement; once the force begins to be favourable, the magnets of the primary rotor stick out of the windows between the bars and act on the secondary rotors, forcing them to rotate, and when this force starts to be negative, the magnets of the primary rotor are positioned behind the magnetic barriers.

The present invention attempts to substitute the use of non-renewable, contaminating, and expensive energies, with the energy of permanent magnets, with the construction of motors which function solely with the magnetic energy of the magnets that, once built, can function for decades without consuming any type of energy and that will be able to be used in an infinite number of sectors in which the use of motors is necessary, such as, for example: the industrial sector, the automobile sector, the agricultural, naval, and housing sectors, the generation of current in large generating plants, etc.

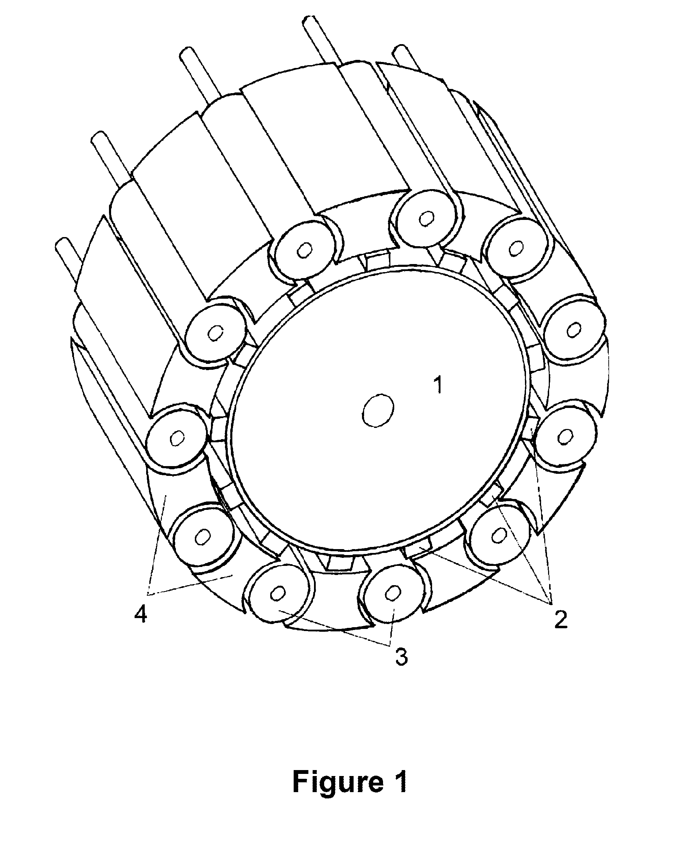

Figure 1 shows the motor with the main rotor (1), and the magnets of the main rotor (2) on the exterior part of the rotor, the secondary rotors (3) which are distributed around the main rotor and the magnetic barriers (4) are between the secondary rotors.
Figure 2 shows an example of magnetic barrier wherein the magnetic strips (5) are observed, and which are facing the secondary rotors; also observed is the magnetic strip (6), which is facing the main rotor and the magnets thereof; and lastly it shows the centre of the bar which is formed by a highly magnetically absorbent material such as iron or other alloys.
Figure 3 shows a direct connection of the secondary rotors with the primary rotor by means of a gear (8) coupled to the shaft of the primary rotor and a series of gears (9) coupled to the shafts of the secondary rotors.

The present invention relates to a motor which operates with permanent magnets with an infinite number of possibilities in size, design and mechanical systems, depending on what its function is going to be. This motor is made up of a main rotor and a series of secondary rotors; the main rotor has a series of magnets or magnetic strip on the outer part thereof which can be fixed, folding or hinged. These magnets would be positioned with one pole facing the exterior of the main rotor and the other facing the interior, although this position can vary considerably, and around this rotor are positioned a series of secondary rotors which rotate about the shaft thereof with the passage of the magnets of the main rotor. The magnets of the secondary rotors are oriented with the north/south axis aligned with the rotational axis of the secondary rotor so that as it rotates, the poles change from north to south on the magnets of the main rotor. The magnets of the main rotor can all be facing the same pole outwards or could also be facing alternately north and south. There could also be a magnetic strip and the size of these magnets can vary depending on the rotational relationship between the primary rotor and the secondary rotor, as the secondary rotors make so many complete rotations to one rotation of the primary rotor as the number of magnets of the same polarity of the primary rotor. All of the magnets, both those of the primary rotor and those of the secondary rotors, can vary considerably in size and proportion depending on the magnetic qualities possessed thereby, and can also be of any magnetic material such as, for example, ferrite, alnico, rare earth, etc. Another rotor with fixed magnets facing inwards can be coupled to the exterior part of the secondary rotors whether or not there is a main rotor. Another model is the motor wherein the secondary rotors are disposed on the main rotor and the fixed, folding or hinged magnets are attached around the main rotor. In addition to the main rotor and the secondary rotors, these motors must have a series of devices which act on the magnets to achieve and improve their operation, such as, amongst others, a bar which can be of different material, be it impermeable or not to the magnetic flow, of ferric or magnetic material, or of a combination of materials so that when a magnet of the primary rotor passes in front of a secondary rotor, this is forced to rotate about the shaft thereof and when this force begins to be unfavourable to movement, the magnet of the primary rotor is positioned behind a magnetic insulator or magnetic barrier which prevents the interaction of the forces between the magnet of the primary rotor and the secondary rotor. This bar can also prevent the secondary rotors from interacting between each other to prevent any force unfavourable to movement. It shall also have a series of mechanisms which permit the acceleration, deceleration, starting up or stopping, and which shall function in different ways depending on their function and size, such as for example the simple braking, approaching and distancing of the magnets of both the main rotor and the secondary rotors, the rotation or folding of the magnets of the main rotor or offsetting of the main rotor with relation to the secondary rotors. The secondary rotors can rotate around the magnets of the main rotor by means of direct gears, in which case the starting up/stopping of the motor could not be due to the offset of the primary rotor with the secondary rotors. The motor can also be controlled by mechanical systems wherein the velocity, starting up, stopping or even the braking of the motor can be controlled due to the fact that if we offset the primary rotors with respect to the secondary rotors, the rotational force of the secondary rotors will be smaller and smaller, to the point at which they oppose the movement and would act as a brake.

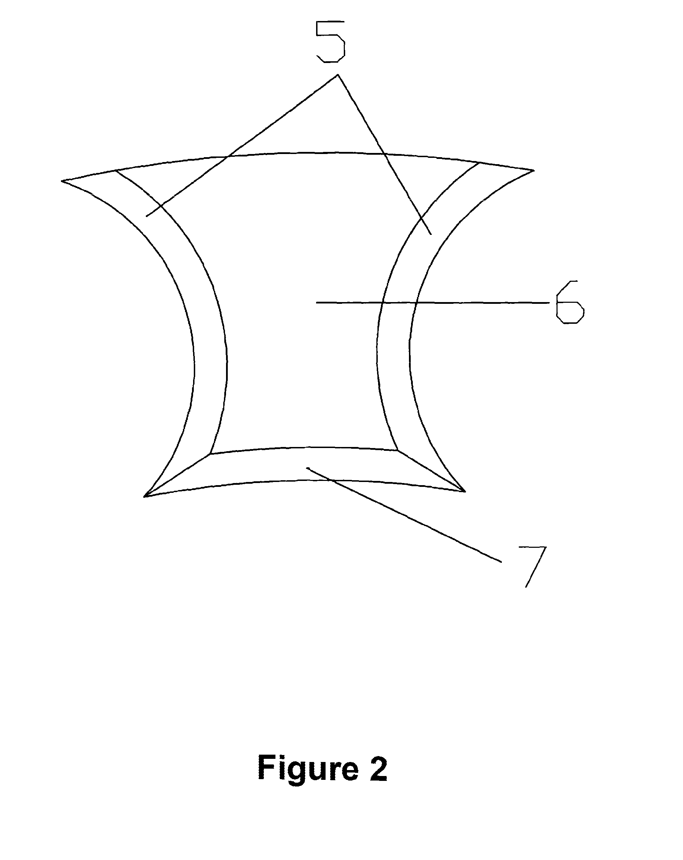

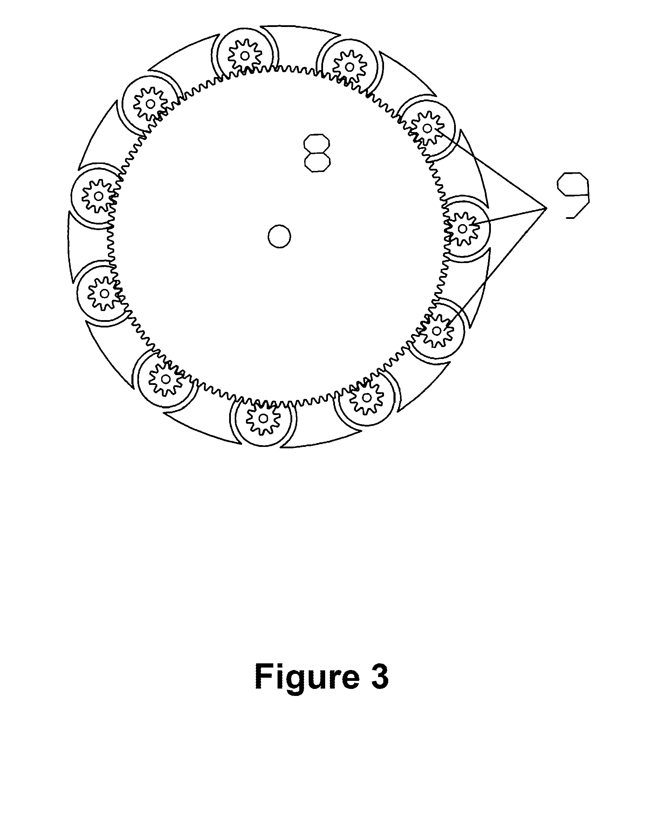

The present invention is also illustrated through the following example, which intends to be very simple for the understanding thereof, but which does not intend to be limitative in its scope. We will have a main rotor (1) with all of the magnets (2) facing north towards the exterior part and a series of secondary rotors (3). The secondary rotors will move in relation to the main rotor by means of a general gear (8, figure 3) which moves the gears of the secondary rotors (9, figure 3). We will be able to vary the coordination of this main gear with relation to the main rotor (1) to control the starting up, stopping, acceleration and deceleration of the motor. The secondary rotors (3) will be oriented so that the north-south plane coincides with the rotational axis of the secondary rotor. We will position magnetic barriers (4) to prevent the interaction of the magnets of the main rotor (1) with the secondary rotor (2) at the moments in which the resulting force opposes the movement. These bars will wrap around the sides of the adjacent secondary rotors and the main rotor between said rotors. A magnetic layer will be formed on the exterior part on the sides which face both the main rotor (6, figure 2) and the secondary rotor (5, figure 2). The thickness of this magnetic layer will depend on the magnetic qualities of this material and we will orient it with the north face facing the rotors. The central part of this bar (7, figure 2) will be of a material which absorbs the magnetic fields such as, for example, of iron or other alloys with greater magnetic absorption, so that the magnetic barrier, as it first has a magnet and then a material which absorbs magnetic fields, prevents the magnets which find the bar between them from interacting. The secondary rotors (2) have both one side and the other with the northern face of the magnets (5) of the magnetic barriers (4), while on one side the magnet of the rotor (3) tries to direct its southern face towards the northern face of the bar (5) and the northern side of the rotor tries to distance itself from the northern face of the bar which is on the other side; the forces balance each other out, not giving any resulting force. The magnets of the main rotor (2), upon bringing its northern face closer to the northern face (6) of the magnetic barrier, experiences a force opposing the movement, but once it reaches the centre of the magnet of the bar, it begins to experience a positive force equal to the negative force that it experienced upon approaching the bar, so the forces balance each other and at the same time that a magnet gets close to a magnetic barrier on the other side, another magnet is distanced from another bar, so the forces offset each other and to better improve and distribute the forces, a prime number of both secondary rotors and of magnets in the primary rotor has been chosen, and the only force that remains is that of the secondary rotor (3) which, when the magnet leaves the main rotor (2) of the magnetic barrier (4), the secondary rotor (3) has its northern face oriented in the direction of the magnet of the primary rotor, which forces the secondary rotor (3) to rotate about the shaft thereof to distance its northern face from the northern face of the main rotor and bring its southern face closer to the northern face thereof. At this moment, the rotational force of the secondary rotor is greater than the repulsion force which influences the magnet of the primary rotor, and when the southern faces of the secondary rotor are about to coincide with the northern face of the magnet of the primary rotor, this hides itself behind another magnetic barrier because the resulting force begins to become negative.

The motors of this invention could be used in an infinite number of sectors in which the use of motors to generate movements, transmission of fluids, generation of current, etc., is necessary. They could be used in, for example: the industrial sector, the automobile sector, the agricultural, naval, and housing sectors, the generation of current in large generating plants, etc.

## Claims

1. The present invention intends to claim all permanent magnet motors which operate with a main rotor (1) and any number of secondary rotors (3) with an infinite number of possibilities in size, design and mechanical systems depending on what its function or use is going to be. This motor is made up of a main rotor (1) and a series of secondary rotors (3); the main rotor has a series of magnets (2) or magnetic strip on the outer part thereof which can be fixed, folding or hinged. These magnets would be positioned with one pole oriented towards the exterior of the main rotor and the other oriented towards the interior, although this position can vary considerably, and around this rotor are positioned a series of secondary rotors (3) which rotate about the shaft thereof with the passage of the magnets of the main rotor (1). The magnets of the secondary rotors (3) are oriented with the north/south axis aligned with the rotational axis of the secondary rotor so that as it rotates, the poles change from north to south on the magnets of the main rotor (1). The magnets (2) of the main rotor can all be facing the same pole outwards or could also be facing alternately north and south. There could also be a magnetic strip and the size of these magnets can vary depending on the rotational relationship between the main primary and the secondary rotor and of the window left by the magnetic barrier (4) or by the magnetic characteristics of the magnets. It can also have a series of devices such as a magnetic insulator or magnetic barrier (4) which permit the operation thereof, such as, for example, a magnetic strip on the sides (5)-(6) and material which absorbs the magnetic field (7) in the centre situated between the secondary rotors (3) and the front of the primary rotor (1). The starting up, stopping, acceleration or deceleration can be performed in several ways, amongst which is folding, distancing, rotating or tilting the magnets (2) of the primary rotor, but the best and simplest way is offsetting the main rotor in relation to the secondary rotors (3), all of this by traditional mechanical means such as, for example, a bushing which couples to the shaft of the main rotor to the main gear (8) which, upon obliquely moving along the shaft of the primary rotor and moving straight along the shaft of the main gear, offsets the main shaft of the secondary gears (9), and therefore of the secondary rotors.

2. Magnetic motor having a primary rotor and secondary rotors according to claim 1, **characterised in that** the secondary rotors are located on the primary rotor and around these is a series of fixed magnets located on the outside.

3. Magnetic motor having a primary rotor and secondary rotors according to claim 1, **characterised in that** the primary rotor rotates around the exterior part of the secondary rotors both whether there is a primary rotor in the inner part or not.

4. Magnetic barrier (figure 2) **characterised in that** it is formed by a highly magnetically absorbent material in the interior (3), such as iron with a magnetic strip on each side which faces both the secondary and main rotors, the width of these magnets depending on the magnetic characteristics thereof. The magnets which face the secondary rotors must have the same polarity towards the face of the rotors and the magnet that faces the primary rotor can have the same polarity as those that face the secondary rotors or not.
